# EUROPEAN PATENT SPECIFICATION

(11) **EP 2 154 964 B1**
(45) Date of publication and mention of the grant of the patent: **20.04.2011**
(21) Application number: 08797179.2
(22) Date of filing: 05.08.2008
(51) Int. Cl.: A01N 43/40, A01N 25/02, A01P 13/00

(54) **HIGH-STRENGTH, LOW-TEMPERATURE STABLE HERBICIDAL FORMULATIONS OF FLUROXYPYR MEPTYL ESTER**
HOCHFESTE UND TIEFTEMPERATURSTABILE HERBIZIDFORMULIERUNGEN AUS FLUROXYPYR-MEPTYL-ESTER
FORMULES HERBICIDES À HAUTE CONCENTRATION D'ESTER DE MEPTYL FLUROXYPYR, STABLES À BASSE TEMPÉRATURE

(30) Priority: 22.08.2007 US 965737 P
(43) Date of publication of application: 24.02.2010
(73) Proprietor: Dow AgroSciences LLC, Indianapolis, IN 46268-1054 (US)
(72) Inventor: HOPKINS, Derek, New Plymouth 4312 (NZ)
(74) Representative: Weiss, Wolfgang
(86) International application number: PCT/US2008/072203
(87) International publication number: WO 2009/025987

(56) References cited:
- WO-A-94/24866
- WO-A-2007/140332
- WO-A-2008/005350
- US-A- 5 283 229

## Description

This application claims the benefit of U.S. Provisional Application Serial No. 60/965,737 filed onAugust 22, 2007.

The present invention relates to herbicidal formulations of fluroxypyr esters. More particularly, the present invention concerns high-strength formulations of fluroxypyr meptyl ester that remain liquid at lower temperatures.

Fluroxypyr is a known, effective herbicide. Fluroxypyr meptyl ester, which is sold commercially as Starane^{™} herbicide (a trademark of Dow AgroSciences LLC), is typically formulated as emulsifiable concentrates at a concentration of 200 grams acid equivalent per liter (gae/L) in aromatic hydrocarbon solvents. A high-strength formulation is desirable for a variety of economic and environmental reasons. For example, it is desirable to provide a high-strength formulation to reduce shipping and handling costs, to reduce the amount of packaging material that must be disposed and to reduce the amount of solvent released into the environment. A high-strength formulation should be stable and retain potency during storage and shipping. Furthermore, a high-strength formulation should be a clear, homogeneous liquid that is stable at ambient temperatures and should not exhibit any precipitation at lower temperatures.

A major limitation of the aromatic hydrocarbon based emulsifiable concentrate of fluroxypyr meptyl ester is its limited stability at low temperature and high concentration. While higher concentration emulsifiable concentrate formulations can be prepared using chlorinated solvents or 1-methyl-2-pyrrolidinone, these solvents have less than preferred environmental profiles. The present invention addresses these needs and provides a wide variety of benefits and advantages.

Surprisingly, it has now been found that a low-temperature stable, high-strength emulsifiable concentrate of fluroxypyr meptyl ester can be prepared by using an *N*-alkanoyl morpholine solvent having the structural formula: 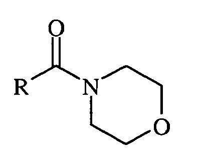 wherein R is a C₅-C₁₁ alkyl group.

Preferably, R represents a C₇-C₉ alkyl group.

Through extensive field testing the new invention has been found to be biologically equivalent to the existing fluroxypyr formulations based upon a petroleum hydrocarbon solvent over a broad spectrum of broadleaf weeds.

The present invention provides a high-strength herbicidal formulation comprising a mixture of a fluroxypyr meptyl ester, a surfactant or mixture of surfactants and an *N*-alkanoyl morpholine as a solvent wherein the formulation contains from 340 grams per liter (g/L) to 600 g/L of fluroxypyr meptyl ester, from 100 g/L to 200 g/L of surfactant and from 300 g/L to 560 g/L of *N*-alkanoyl morpholine as a solvent.

In general the present invention is directed to high-strength herbicidal formulations containing fluroxypyr meptyl ester. The herbicidal formulation includes the fluroxypyr meptyl ester in an amount sufficient to provide the high-strength formulation with no crystallization at temperatures as low as 0°C. The high-strength herbicidal formulation includes at least 300 gae/L to 350 gae/L based upon the fluroxypyr acid equivalent of the fluroxypyr meptyl ester. This typically corresponds to 430 g/L to 505 g/L of the fluroxypyr meptyl ester.

The surfactants can be anionic, cationic or nonionic in character. Surfactants conventionally used in the art of formulation and which may also be used in the present formulations are described, *inter alia,* in "McCutcheon's Detergents and Emulsifiers Annual", MC Publishing Corp., Ridgewood, New Jersey, 1998 and in "Encyclopedia of Surfactants", Vol. I-III, Chemical publishing Co., New York, 1.980-81. Typical surfactants include salts of alkyl sulfates, such as diethanolammonium lauryl sulfate; alkylarylsulfonate salts, such as calcium dodecylbenzenesulfonate; alkyl and/or arylalkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylanunonium chloride; polyethylene glycol esters of fatty acids, such as polyethylene glycol stearate; block copolymers of ethylene oxide and propylene oxide; salts of mono and dialkyl phosphate esters; and mixtures thereof. The surfactant or mixture of surfactants is usually present at a concentration of from 100 g/L to 200 g/L.

The solvent, which typically makes up the remainder of the high-strength herbicidal formulation, is an *N*-alkanoyl morpholine of the formula: 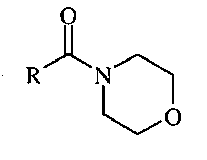 wherein R is a C₅-C₁₁ alkyl group.

*N*-Alkanoyl morpholines are commercially available and are often supplied as mixtures or blends of materials containing alkyl groups of various lengths. The solvent is usually present at a concentration from 300 g/L to 560 g/l, more preferably from 350 g/L to 450 g/L.

The high-strength, herbicidal formulation does not exhibit separation or precipitation (or crystallization) of any of the components at low temperatures. For example, the high-strength formulation remains a clear solution at temperatures below 10 °C, more preferably at temperatures 0°C.

In addition to the formulations set forth above, the present invention also embraces the compositions of these fluroxypyr meptyl ester formulations in combination with one or more additional compatible ingredients. Other additional ingredients may include, for example, one or more other herbicides, dyes, and any other additional ingredients providing functional utility, such as, for example, stabilizers, fragrant, viscosity-lowering additives, and freeze-point depressants.

Additional herbicidal compounds employed as supplements or additives should not be antagonistic to the activity of the fluroxypyr meptyl ester composition as employed in the present invention. Suitable herbicidal compounds include, but are not limited to 2,4-D, 2,4-MCPA, ametryn, aminopyralid, asulam, atrazine, butafenacil, carfentrazone-ethyl, chlorflurenol, chlomequat, chlorpropham, chlorsulfuron, chlortoluron, cinosulfuron, clethodim, clopyralid, cyclosulfamuron, pyroxsulam, dicamba, dichlobenil, dichlorprop-P, diclosulam, diflufenican, diflufenzopyr, diuron, glyphosate, hexazinone, imazamox, imazapic, imazapyr, imazaquin, imazethapyr, imazosulfuron, MCPA, metsulfuron-methyl, picloram, pyrithiobac-sodium, sethoxydim, sulfometuron, sulfosate, sulfosulfuron, tebuthiuron, terbacil, thiazopyr, thifensulfuron, triasulfuron, tribenuron and triclopyr. The herbicidal formulations of the present invention can be co-formulated with the other herbicide or herbicides, tank mixed with the other herbicide or herbicides, or applied sequentially with the other herbicide or herbicides.

Dyes may be used in the formulated composition as a marker. Generally, a preferred dye can be any oil-soluble dye selected from EPA's approved list of inerts exempt from tolerance. Such dyes may include, for example, D&C Red #17, D&C Violet #2, and D&C Green #6. Dyes are generally added to the composition by adding the desired amount of dye to the formulated composition with agitation. Dyes are generally present in the final formulation composition in a concentration of 0.1-1.0% by weight.

The compositions of the present invention are diluted with water prior to being applied. The diluted compositions usually applied to cereals and range and pastures generally contain 0.0001 to 5.0 weight percent the fluroxypyr meptyl ester.

### Example 1: Preparation of High-Strength Fluroxypyr Meptyl Ester Formulation

A high-strength formulation was prepared containing 333 gae/L of fluroxypyr meptyl ester by dissolving 480 g/L technical fluroxypyr meptyl ester with stirring into 443 g/L of Jeffsol AG1730 (Huntsman Corporation; mixture of *N*-alkanoyl morpholines from *N*-pentanoylmorpholine to *N*-undecanoylmorpholine), 78.5 g/L Tensiofix N9811 HF (OmniChem nv; proprietary anionic-nonionic blend) and 78.5 g/L ethoxylated tristyrylphenol at room temperature.

Unlike the commercial formulation based on aromatic hydrocarbon solvents, which required packaging material with high barrier properties, e.g., fluorinated HDPE or metal or metal lined containers, to prevent migration through the packaging material, this formulation can be packaged in standard HDPE containers. In addition, seals and O-rings are much less sensitive to the new formulation compared to the commercial formulation based on aromatic hydrocarbon solvents.

### Example 2: Low Temperature Storage Stability of High-Strength Fluroxypyr Meptyl Ester Formulations

The formulation of Example 1 was cooled and the crystallization point was determined to be less than 0 °C. A seeded sample of the formulation did not crystallize at -10 °C for greater than 4 weeks.

## Claims

1. A high-strength, low-temperature stable herbicidal formulation comprising a mixture of fluroxypyr meptyl ester, a surfactant or mixture of surfactants, and an *N*-alkanoyl morpholine solvent of the formula: 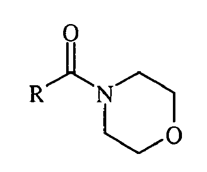 wherein R is a C₅-C₁ alkyl group
wherein the formulation contains from 430 grams per liter (g/L) to 600 g/L of the fluroxypyr ester, from 100 g/L to 200 g/L of surfactant and from 300 g/L to 560 g/L of *N*-alkanoyl morpholine as a solvent.

2. A formulation of Claim 1 in which the *N*-alkanoyl morpholine is a mixture of from *N*-pentanoylmorpholine to *N*-undecanoylmorpholine.

## Patentansprüche

1. Hochfeste, niedertemperaturstabile Herbizidformulierung umfassend eine Mischung von Fluroxypyrmeptylester, einem Tensid oder einer Mischung von Tensiden, und einem N-Alkanoylmorpholin-Lösungsmittel der Formel 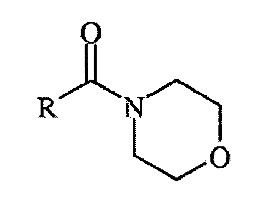 wobei R eine C₅-C₁₁Alkylgruppe ist,
wobei die Formulierung von 430 Gramm pro Liter (g/L) bis 600 g/L des Fluroxypyresters, von 100 g/L bis 200 g/L Tensid und von 300 g/L bis 560 g/L N-Alkanoylmorpholin als ein Lösungsmittel enthält.

2. Formulierung nach Anspruch 1, in der das N-Alkanoylmorpholin eine Mischung aus von N-Pentanoylmorpholin bis N-Undecanoylmorpholin ist.

## Revendications

1. Formulation d'herbicide fortement concentrée, stable à basse température, comprenant un mélange d'ester meptylique de fluroxypyr, d'un tensioactif ou d'un mélange de tensioactifs, et d'un solvant qui est une N-alcanoyl-morpholine de formule : 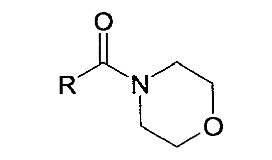 dans laquelle R représente un groupe alkyle en C₅₋₁₁,
laquelle formulation contient de 430 à 600 g/L (grammes par litre) dudit ester de fluroxypyr, de 100 à 200 g/L de tensioactif, et de 300 à 560 g/L d'une N-alcanoyl-morpholine en tant que solvant.

2. Formulation conforme à la revendication 1, dans laquelle la N-alcanoyl-morpholine est un mélange de dérivés de la gamme allant de la N-pentanoyl-morpholine à la N-undécanoyl-morpholine.
